# EUROPÄISCHE PATENTSCHRIFT

(11) **EP 2 808 638 B1**
(45) Veröffentlichungstag und Bekanntmachung des Hinweises auf die Patenterteilung: **04.09.2019**
(21) Anmeldenummer: 14168489.4
(22) Anmeldetag: 15.05.2014
(51) Int. Cl.: F28D 1/047, F24D 3/16, F24F 5/00

(54) **Wärmetauscher und Verfahren zum Befestigen**
Heat exchanger and method for fixing
Échangeur thermique et procédé de fixation

(30) Priorität: 28.05.2013 DE 102013209961
(43) Veröffentlichungstag der Anmeldung: 03.12.2014
(73) Patentinhaber: Krantz GmbH, 52072 Aachen (DE)
(72) Erfinder: Bitter, Kristina, 44139 Dortmund (DE); Laudenberg, Rainer, 52152 Simmerath (DE); Schmidt, Volker, 6466 EN Kerkrade (NL); Schürkötter, Franz-Josef, 58710 Menden (DE)
(74) Vertreter: Bauer, Dirk

(56) Entgegenhaltungen:
- EP-A1- 1 035 381
- EP-A2- 0 406 476
- EP-A2- 1 426 721
- DE-A1- 3 941 618

## Beschreibung

Die Erfindung betrifft zunächst einen Wärmetauscher mit einer ferromagnetischen Verkleidung, sowie mit einem flächigen Kontaktelement und einem darauf angebrachten Wärmeleitelement, mittels dessen einerseits ein von einem Fluid durchströmbares Rohr auf dem Kontaktelement gehaltert ist und andererseits ein parallel zu dem Rohr verlaufender streifenförmiger Magnet, der das Kontaktelement und die Verkleidung aneinander haltert. Die Erfindung betrifft weiterhin ein Verfahren zum Befestigen eines von einem Fluid durchströmbaren Rohrs und eines parallel zum dem Rohr verlaufenden streifenförmigen Magneten auf einem flächigen Kontaktelement für einen Wärmetauscher mit einer ferromagnetischen Verkleidung, wobei ein Wärmeleitelement auf dem Kontaktelement angebracht wird, das das Rohr und den Magneten haltert.

Wärmetauscher der vorgenannten Art sind insbesondere von der Decke eines Raums in einem Gebäude abgehängte, sogenannte "Kühldecken" oder entsprechend einer Wand eines Raums vorgehängte Wandelemente. Das Rohr wird mit einem flüssigen Wärmeträger, zumeist Wasser durchströmt, der je nach Anwendung zum Kühlen oder Heizen des Raums Wärme über das Wärmeleitelement, das Kontaktelement und die Verkleidung durch Strahlung und Konvektion in den Raum abgibt oder aus dem Raum aufnimmt. Die streifenförmigen Magneten stellen eine flächige Anlage des Kontaktelements an der Verkleidung und dadurch einen möglichst guten Wärmeübergang zwischen beiden sicher. Das Dokument DE 39 41 618 A1 offenbart eine Vorrichtung zum Kühlen oder Heizen eines Raumes, umfassend ein flächiges Wärmeleitelement, das mit Leitungssträngen in Form von Rohren wärmeübertragend in Verbindung steht. Mittels eines Magneten, der an dem Wärmeleitelement befestigt ist, wird eine im Abstand zu dem Magneten verlaufende Deckplatte gehalten, die durch die Magnetkraft gegen die Rohre gedrückt wird, um den Wirkungsgrad der Vorrichtung zu erhöhen.

In einem Wärmetauscher und einem Verfahren der vorgenannten Art schlägt DE 200 15 084 U1 als Wärmeleitelement ein Aluminium-Stranggussprofil mit Ausnehmungen für das Rohr und für zwei parallel zu dem Rohr verlaufende Magnetstreifen vor, wobei das Wärmeleitelement zugleich zur Halterung des Wärmetauschers an der Decke oder Wand des Raums dient. Mit Hilfe der Magnetstreifen wird die Verkleidung (auch: "Deckenplatte") an den Wärmetauscher gekoppelt und ein Durchhängen vermieden.

Das Wärmeleitelement des bekannten Wärmetauschers ist durch die aufwändige Herstellung im Aluminium-Strangguss nicht nur teuer, sondern weist auch gussspezifisch eine hohe Wandstärke und damit ein hohes Gewicht auf. Die für die Halterung an der Decke oder Wand an das Wärmeleitelement angeformten Stege werden aufgrund der guten Wärmeleitung des Materials außerdem - bei Verwendung als Heizelement - unnötig geheizt, was den energetischen Wirkungsgrad des bekannten Wärmetauschers vermindert.

Im Hintergrund der Erfindung schlägt DE 20 2010 015 951 U1 einen ähnlichen Wärmetauscher vor, dessen Kontaktelement mit der Verkleidung verklebt ist, wobei das Rohr auf dem Kontaktelement liegt und ein Aluminium-Wärmeleitblech als Wärmeleitelement das Rohr derart überdeckt, dass es einer Kontur des Rohrs folgt.

### Aufgabe

Der Erfindung liegt die Aufgabe zugrunde, ein leichtes und kostengünstiges Wärmeleitelement für einen Wärmetauscher der eingangs genannten Art vorzuschlagen.

### Lösung

Ausgehend von dem bekannten Wärmetauscher wird nach der Erfindung vorgeschlagen, dass das Rohr und der Magnet auf dem Kontaktelement liegen und ein Aluminium-Wärmeleitblech als Wärmeleitelement das Rohr und den Magnet derart überdeckt, dass es einer Kontur des Rohrs und des Magneten folgt. Das Wärmeleitelement eines erfindungsgemäßen Wärmetauschers weist gegenüber dem Wärmeleitelement des bekannten Wärmetauschers eine signifikant geringere Wandstärke und damit ein entsprechend geringeres Gewicht, ist einfach zu fertigen und zu verarbeiten und dadurch erheblich kostengünstiger. Zugleich fixiert er auf besonders einfache Weise sowohl das Rohr als auch den Magnete an dem Kontaktelement.

Vorzugsweise liegen in einem erfindungsgemäßen Wärmetauscher das Rohr und der Magnet nebeneinander auf dem Kontaktelement. Bei Anordnung nebeneinander auf dem Kontaktelement, so dass das Rohr unmittelbar auf dem Kontaktelement aufliegt, zeichnet sich der erfindungsgemäße Wärmetauscher durch einen besonders guten Wärmeleitung zwischen Rohr und Verkleidung aus.

Alternativ kann in einem anderen erfindungsgemäßen Wärmetauscher der Magnet auch unter dem Rohr auf dem Kontaktelement liegen. Ein solcher erfindungsgemäßer Wärmetauscher ist gegenüber der Anordnung nebeneinander leichter zu fertigen. Insbesondere können Rohr und Magnet als Einheit vor dem Anbringen an dem Kontaktelement vorgefertigt werden und die Kontur, der das Wärmeleitelement folgt, ist weniger komplex.

Bevorzugt weist in einem erfindungsgemäßen Wärmetauscher das Kontaktelement einen nutförmigen Durchbruch auf, in dem der Magnet einliegt. Bei Anordnung in einem Durchbruch des Kontaktelements weist der Magnet einen besonders geringen Abstand zu der Verkleidung auf, die Haltekraft zwischen Kontaktelement und Verkleidung ist dadurch besonders hoch.

In einer vorteilhaften Ausführung eines erfindungsgemäßen Wärmetauschers verläuft das Rohr mäanderförmig auf dem Kontaktelement. Da die zwischen dem Rohr und der Verkleidung übertragbare Wärme im Wesentlichen zu der Kontaktfläche zwischen beiden - und damit zu der Länge des auf dem Kontaktelement liegenden Rohres - proportional ist, weist ein solcher erfindungsgemäßer Wärmetauscher eine besonders hohe Leistung auf.

Besonders bevorzugt ist in einem erfindungsgemäßen Wärmetauscher ein auf dem Kontaktelement anliegender Bereich des Rohrs abgeflacht. Ein solcher erfindungsgemäßer Wärmetauscher zeichnet sich durch eine besonders gute Wärmeleitung zwischen Rohr und Verkleidung aus.

In einer besonders vorteilhaften Ausführung besteht das Rohr eines erfindungsgemäßen Wärmetauschers aus Kupfer. Kupferrohre sind besonders einfach zu verarbeiten, gegen Wasser als Wärmeträgerfluid unempfindlich und zeichnen sich durch eine gute Wärmeleitung zwischen Rohr und Verkleidung aus.

Weiterhin ist in besonders vorteilhaften Ausführung eines erfindungsgemäßen Wärmetauschers das Kontaktelement ein Aluminiumblech. Aluminiumbleche sind gleichfalls besonders einfach herzustellen und zeichnen sich durch hohe Steifigkeit sowie gleichfalls eine gute Wärmeleitung zwischen Rohr und Verkleidung aus.

Ausgehend von dem bekannten Verfahren wird nach der Erfindung vorgeschlagen, dass das Rohr und der Magnet auf das Kontaktelement gelegt und mittels eines Aluminium-Wärmeleitblechs als Wärmeleitelement derart überdeckt werden, dass es einer Kontur des Rohrs und des Magneten folgt. Das erfindungsgemäße Verfahren ermöglicht die Herstellung eines erfindungsgemäßen Wärmetauschers und zeichnet sich gleichfalls durch dessen oben beschriebene Vorteile aus.

Vorzugsweise wird in einem erfindungsgemäßen Verfahren das Wärmeleitelement mit dem Kontaktelement verklebt. So lässt sich besonders einfach und besonders kostengünstig ein erfindungsgemäßes Wärmeleitelement herstellen.

Bevorzugt wird in einem erfindungsgemäßen Verfahren das Rohr unter Verwendung von Wärmeleitpaste auf das Kontaktelement gelegt. Ein in einem solchen erfindungsgemäßen Verfahren hergestellter Wärmetauscher zeichnet sich durch eine besonders gute Wärmeleitung zwischen Rohr und Verkleidung aus.

Das Kontaktelement eines erfindungsgemäßen Wärmetauschers kann besonders einfach aus Aluminiumblech gefertigt und durch Stanzen mit Ösen sein. Diese Ösen können über Haken mit einer Deckentraverse verbunden werden, um ein Durchhängen des Wärmetauschers zu vermeiden.

### Ausführungsbeispiel

Die Erfindung wird nachfolgend anhand von Ausführungsbeispielen erläutert. Es zeigen
- Fig. 1a: ein Kontaktelement eines ersten erfindungsgemäßen Wärmetauschers,
- Fig. 1b: ein Detail dieses Kontaktelements und
- Fig. 2-6: Details von Kontaktelementen weiterer erfindungsgemäßer Wärmetauscher.

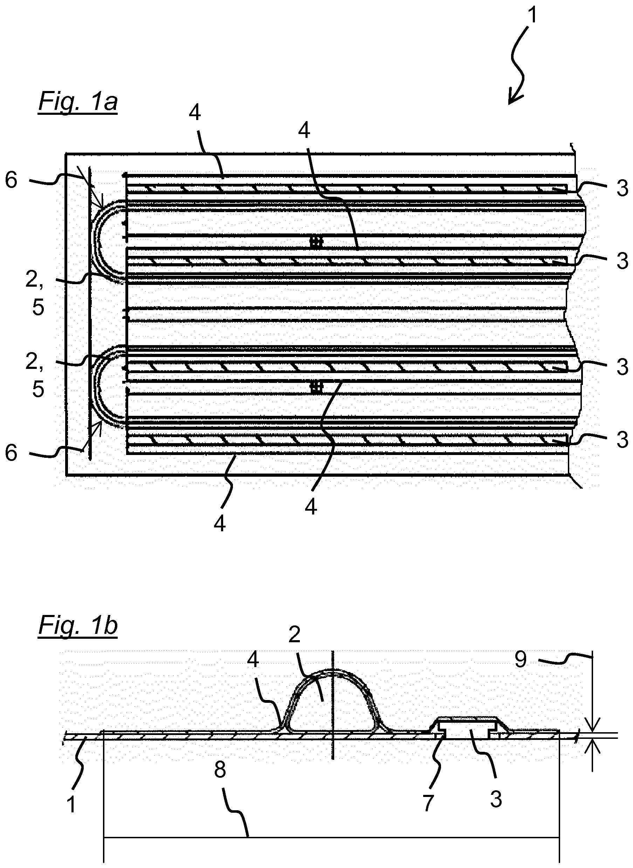

Das in Figur 1a gezeigte Kontaktelement 1 eines ersten erfindungsgemäßen Wärmetauschers mit nicht dargestellter ferromagnetischer Verkleidung weist ein mäanderförmig auf dem Kontaktelement 1 verlaufendes Rohr 2 und eine Mehrzahl von jeweils parallel zum dem Rohr 2 verlaufenden streifenförmigen Magneten 3 auf. Das Kontaktelement 1 besteht aus Aluminiumblech, das Rohr 2 und jeweils einer der Magnete 3 ist von einem Aluminium-Wärmeleitblech als Wärmeleitelement 4 überdeckt. Die endseitigen Bögen 5 des Kontaktelements 1 weisen einen Radius 6 von 32,5 mm auf. Das Rohr 2 ist ein gezogenes D-Rohr aus Kupfer mit einem Nenndurchmesser von 10 *mm.*

Wie in Figur 1a im Detailschnitt dargestellt, folgt das Wärmeleitelement 4 einer Kontur des Rohrs 2 und des Magneten 3 und schmiegt sich an beide sowie an das Kontaktelement 1 an. Die Magneten 3 weisen ein T-förmiges Profil auf und liegen jeweils in einer aus dem Kontaktelement 1 ausgestanzten Nut 7 ein. Das Wärmeleitblech weist eine Breite 8 von 75 *mm* und das Kontaktelement 1 eine Dicke 9 von 1 *mm* auf. Zur Herstellung des ersten erfindungsgemäßen Wärmetauschers wurde das Rohr 2 unter Verwendung von nicht dargestellter Wärmeleitpaste auf das Kontaktelement 1 gelegt.

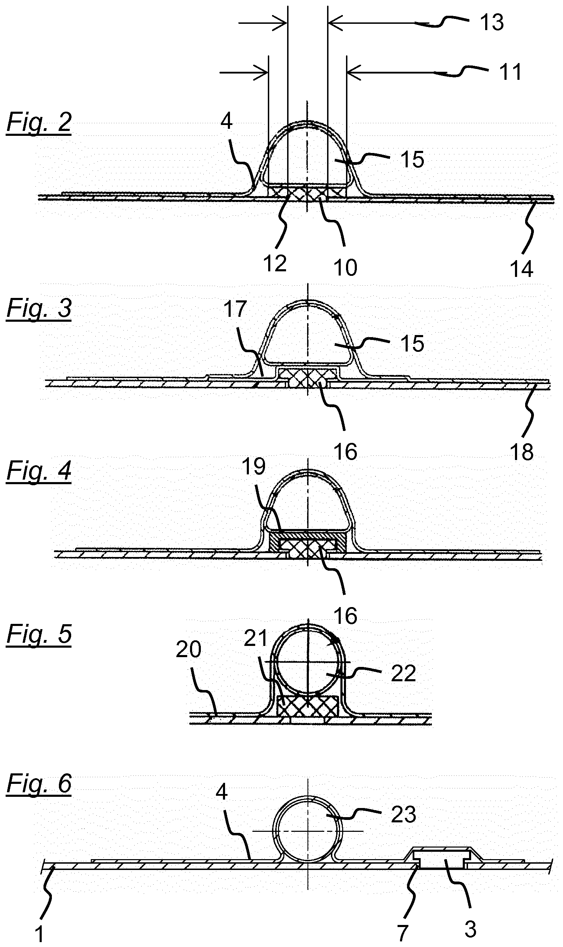

Figur 2 zeigt einen entsprechenden Detailschnitt durch einen zweiten erfindungsgemäßen Wärmetauscher, der im Wesentlichen dem ersten erfindungsgemäßen Wärmetauscher entspricht. In dem zweiten Wärmetauscher liegt abweichend ein T-förmiger Magnet 10 mit einer Breite 11 von 12 *mm* in einer Nut 12 mit einer Breite 13 von 6 *mm* zwischen dem Kontaktelement 14 und dem Rohr 15, das hier einen Nenndurchmesser von 12 *mm* aufweist.

Figur 3 zeigt einen entsprechenden Detailschnitt durch einen dritten erfindungsgemäßen Wärmetauscher, der im Wesentlichem dem zweiten erfindungsgemäßen Wärmetauscher entspricht. In dem dritten Wärmetauscher ist abweichend der Magnet 16 mittels eines Wärmeleitblechs 17 an dem Kontaktelement 18 gehaltert, um den Wärmeübergang zwischen dem Rohr 15 und dem Kontaktelement 18 zu verbessern.

Figur 4 zeigt einen entsprechenden Detailschnitt durch einen vierten erfindungsgemäßen Wärmetauscher, der im Wesentlichen dem dritten erfindungsgemäßen Wärmetauscher entspricht. In dem vierten Wärmetauscher ist abweichend der Magnet 16 aus demselben Grund von einem Aluminiumprofil 19 überdeckt.

Figur 5 zeigt einen entsprechenden Detailschnitt durch einen fünften erfindungsgemäßen Wärmetauscher, der im Wesentlichen dem zweiten erfindungsgemäßen Wärmetauscher entspricht. In dem fünften Wärmetauscher weist abweichend das Kontaktelement 20 keine Nut, der Magnet 21 einen Rechteckquerschnitt und das Rohr 22 einen kreisförmigen Querschnitt mit einem Nenndurchmesser von 10 *mm* auf.

Figur 6 zeigt einen entsprechenden Detailschnitt durch einen sechsten erfindungsgemäßen Wärmetauscher, der im Wesentlichen dem ersten erfindungsgemäßen Wärmetauscher. In dem sechsten Wärmetauscher weist abweichend das Rohr 23 einen kreisförmigen Querschnitt auf.

In den Figuren sind
- 1: Kontaktelement
- 2: Rohr
- 3: Magnet
- 4: Wärmeleitelement
- 5: Bogen
- 6: Radius
- 7: Nut
- 8: Breite
- 9: Dicke
- 10: Magnet
- 11: Breite
- 12: Nut
- 13: Breite
- 14: Kontaktelement
- 15: Rohr
- 16: Magnet
- 17: Wärmeleitblech
- 18: Kontaktelement
- 19: Aluminiumprofil
- 20: Kontaktelement
- 21: Magnet
- 22: Rohr
- 23: Rohr

## Patentansprüche

1. Wärmetauscher mit einer ferromagnetischen Verkleidung, sowie mit einem flächigen Kontaktelement (1, 14, 18, 20) und einem darauf angebrachten Wärmeleitelement (4), mittels dessen einerseits ein von einem Fluid durchströmbares Rohr (2, 15, 22, 23) auf dem Kontaktelement (1, 14, 18, 20) gehaltert ist und andererseits ein parallel zu dem Rohr (2, 15, 22) verlaufender streifenförmiger Magnet (3, 10, 16, 21), der das Kontaktelement (1, 14, 18, 20) und die Verkleidung aneinander haltert, ***dadurch gekennzeichnet,* dass** das Rohr (2, 15, 22, 23) und der Magnet (3, 10, 16, 21) auf dem Kontaktelement (1, 14, 18, 20) liegen und ein Aluminium-Wärmeleitblech als Wärmeleitelement (4) das Rohr (2, 15, 22, 23) und den Magnet (3, 10, 16, 21) derart überdeckt, dass es einer Kontur des Rohrs (2, 15, 22, 23) und des Magneten (3, 10, 16, 21) folgt.

2. Wärmetauscher nach dem vorgenannten Anspruch, ***dadurch gekennzeichnet, dass*** das Rohr (2, 23) und der Magnet (3) nebeneinander auf dem Kontaktelement (1) liegen.

3. Wärmetauscher nach einem der vorgenannten Ansprüche, ***dadurch gekennzeichnet, dass*** das Kontaktelement (1, 14, 18) einen nutförmigen Durchbruch aufweist, in dem der Magnet (3, 10, 16) einliegt.

4. Wärmetauscher nach einem der vorgenannten Ansprüche, ***dadurch gekennzeichnet, dass*** das Rohr (2, 15, 22, 23) mäanderförmig auf dem Kontaktelement (1, 14, 18, 20) verläuft.

5. Wärmetauscher nach einem der vorgenannten Ansprüche, ***dadurch gekennzeichnet,* dass** ein auf dem Kontaktelement (1, 14, 18) anliegender Bereich des Rohrs (2, 15) abgeflacht ist.

6. Wärmetauscher nach einem der vorgenannten Ansprüche, ***dadurch gekennzeichnet, dass*** das Rohr (2, 15, 22, 23) aus Kupfer besteht.

7. Wärmetauscher nach einem der vorgenannten Ansprüche, ***dadurch gekennzeichnet, dass*** das Kontaktelement (1, 14, 18, 20) ein Aluminiumblech ist.

8. Verfahren zum Befestigen eines von einem Fluid durchströmbaren Rohrs (2, 15, 22, 23) und eines parallel zum dem Rohr (2, 15, 22, 23) verlaufenden streifenförmigen Magneten (3, 10, 16, 21) auf einem flächigen Kontaktelement (1, 14, 18, 20) für einen Wärmetauscher mit einer ferromagnetischen Verkleidung, wobei ein Wärmeleitelement (4) auf dem Kontaktelement (1, 14, 18, 20) angebracht wird, das das Rohr (2, 15, 22, 23) und den Magneten (3, 10, 16, 21) haltert, ***dadurch gekennzeichnet, dass*** das Rohr (2, 15, 22, 23) und der Magnet auf das Kontaktelement (1, 14, 18, 20) gelegt und mittels eines Aluminium-Wärmeleitblechs als Wärmeleitelement (4) derart überdeckt werden, dass es einer Kontur des Rohrs (2, 15, 22, 23) und des Magneten (3, 10, 16, 21) folgt.

9. Verfahren nach dem vorgenannten Anspruch, ***dadurch gekennzeichnet, dass*** das Wärmeleitelement (4) mit dem Kontaktelement (1, 14, 18, 20) verklebt wird.

10. Verfahren nach einem der Ansprüche 8 und 9, ***dadurch gekennzeichnet, dass** das* Rohr (2, 15, 22, 23) unter Verwendung von Wärmeleitpaste auf das Kontaktelement (1, 14, 18, 20) gelegt wird.

## Claims

1. A heat exchanger with a ferromagnetic casing, together with a planar contact element (1, 14, 18, 20) and a heat-conducting element (4) mounted thereon, by means of which, on the one hand, a tube (2, 15, 22, 23) through which a fluid can flow is held on the contact element (1, 14, 18, 20) and, on the other hand, a strip-shaped magnet (3, 10, 16, 21) which runs parallel to the tube (2, 15, 22), holds the contact element (1, 14, 18, 20) and the casing together,
**characterised in that**,
the tube (2, 15, 22, 23) and the magnet (3, 10, 16, 21) lie on the contact element (1, 14, 18, 20), and an aluminium heat-conducting plate as the heat-conducting element (4) covers the tube (2, 15, 22, 23) and the magnet (3, 10, 16, 21) such that it follows a contour of the tube (2, 15, 22, 23) and the magnet (3, 10, 16, 21).

2. The heat exchanger in accordance with the above-cited claim,
**characterised in that**,
the tube (2, 23) and the magnet (3) lie side by side on the contact element (1).

3. The heat exchanger in accordance with one of the above-cited claims,
**characterised in that**,
the contact element (1, 14, 18) has a groove-shaped opening in which the magnet (3, 10, 16) is inserted.

4. The heat exchanger in accordance with one of the above-cited claims,
**characterised in that**,
the tube (2, 15, 22, 23) extends in a meandering manner on the contact element (1, 14, 18, 20).

5. The heat exchanger in accordance with one of the above-cited claims,
**characterised in that**,
a region of the tube (2, 15) fitting on the contact element (1, 14, 18) is flattened.

6. The heat exchanger in accordance with one of the above-cited claims,
**characterised in that**,
the tube (2, 15, 22, 23) is made of copper.

7. The heat exchanger in accordance with one of the above-cited claims,
**characterised in that**,
the contact element (1, 14, 18, 20) is an aluminium sheet.

8. A method for attaching a tube (2, 15, 22, 23), through which a fluid can flow, and a strip-shaped magnet (3, 10, 16, 21) running parallel to the tube (2, 15, 22, 23) onto a planar contact element (1, 14, 18, 20) for a heat exchanger with a ferromagnetic casing, wherein
a heat-conducting element (4) is mounted on the contact element (1, 14, 18, 20), which holds the tube (2, 15, 22, 23) and the magnet (3, 10, 16, 21),
**characterised in that**,
the tube (2, 15, 22, 23) and the magnet are placed on the contact element (1, 14, 18, 20) and covered by means of an aluminium heat-conducting plate as the heat-conducting element (4) such that it follows a contour of the tube (2, 15, 22, 23) and the magnet (3, 10, 16, 21).

9. The method in accordance with the above-cited claim,
**characterised in that**,
the heat-conducting element (4) is adhesively bonded to the contact element (1, 14, 18, 20).

10. The method in accordance with one of the claims 8 and 9,
**characterised in that**,
the tube (2, 15, 22, 23) is placed onto the contact element (1, 14, 18, 20) using a heat-conducting paste.

## Revendications

1. Échangeur thermique, pourvu d'un revêtement ferromagnétique, ainsi que d'un élément de contact (1, 14, 18, 20) plan et d'un élément conducteur thermique (4) monté sur celui-ci, au moyen duquel, d'une part un tube (2, 15, 22, 23) susceptible d'être traversé par le fluide est fixé sur l'élément de contact (1, 14, 18, 20) et d'autre part, un aimant (3, 10, 16, 21) en forme de ruban, s'écoulant à la parallèle du tube (2, 15, 22) qui fixe l'un à l'autre l'élément de contact (1, 14, 18, 20) et le revêtement, **caractérisé en ce que** le tube (2, 15, 22, 23) et l'aimant (3, 10, 16, 21) reposent sur l'élément de contact (1, 14, 18, 20) et **en ce qu'**une tôle conductrice en aluminium en tant qu'élément conducteur thermique (4) recouvre le tube (2, 15, 22, 23) et l'aimant (3, 10, 16, 21) de telle sorte qu'elle suive un contour du tube (2, 15, 22, 23) et de l'aimant (3, 10, 16, 21).

2. Échangeur thermique selon la revendication précédente, **caractérisé en ce que** le tube (2, 23) et l'aimant (3) reposent côte à côte sur l'élément de contact (1).

3. Échangeur thermique selon l'une quelconque des revendications précédentes, **caractérisé en ce que** l'élément de contact (1, 14, 18) comporte un ajour en forme de rainure dans lequel est inséré l'aimant (3, 10, 16).

4. Échangeur thermique selon l'une quelconque des revendications précédentes, **caractérisé en ce que** le tube (2, 15, 22, 23) s'écoule en forme de méandres sur l'élément de contact (1, 14, 18, 20).

5. Échangeur thermique selon l'une quelconque des revendications précédentes, **caractérisé en ce qu'**une zone du tube (2, 15) jouxtant l'élément de contact (1, 14, 18) est aplatie.

6. Échangeur thermique selon l'une quelconque des revendications précédentes, **caractérisé en ce que** le tube (2, 15, 22, 23) est en cuivre.

7. Échangeur thermique selon l'une quelconque des revendications précédentes, **caractérisé en ce que** l'élément de contact (1, 14, 18, 20) est une tôle d'aluminium.

8. Procédé, destiné à fixer un tube (2, 15, 22, 23) susceptible d'être traversé par un fluide et un aimant (3, 10, 16, 21) en forme de ruban s'écoulant à la parallèle du tube (2, 15, 22, 23) sur un élément de contact (1, 14, 18, 20) plan destiné à un échangeur thermique pourvu d'un revêtement ferromagnétique, lors duquel on monte un élément conducteur thermique (4) sur l'élément de contact (1, 14, 18, 20) qui fixe le tube (2, 15, 22, 23) et l'aimant (3, 10, 16, 21), **caractérisé en ce qu'**on pose le tube (2, 15, 22, 23) et l'aimant sur l'élément de contact (1, 14, 18, 20) et on les recouvre au moyen d'une tôle conductrice thermique en aluminium en tant qu'élément conducteur thermique (4) de telle sorte qu'elle suive un contour du tube (2, 15, 22, 23) et de l'aimant (3, 10, 16, 21) .

9. Procédé selon la revendication précédente, **caractérisé en ce qu'**on colle l'élément conducteur thermique (4) avec l'élément de contact (1, 14, 18, 20).

10. Procédé selon l'une quelconque des revendications 8 et 9, **caractérisé en ce qu'**on pose le tube (2, 15, 22, 23) sur l'élément de contact (1, 14, 18, 20) en utilisant une pâte thermoconductrice.
